Europäisches Patentamt

European Patent Office

Office européen des brevets

(11) Veröffentlichungsnummer: **0 001 970**
A1

# (12) EUROPÄISCHE PATENTANMELDUNG

(21) Anmeldenummer: 78100964.2

(22) Anmeldetag: 22.09.78

(51) Int. Cl.²: **B 29 B 1/06**, B 29 B 1/10, B 29 F 3/02

(30) Priorität: 12.11.77 DE 2750767

(43) Veröffentlichungstag der Anmeldung: 30.05.79
Patentblatt 79/11

(84) Benannte Vertragsstaaten: DE FR GB NL SE

(71) Anmelder: **Werner & Pfleiderer, Theodorstrasse 10, D-7000 Stuttgart 30 (DE)**

(72) Erfinder: **Seufert, Wilhelm, Charlottenstrasse 32, D-7015 Korntal (DE)**
Erfinder: **Gnädig, Gerhard, Gerlinger Strasse 18, D-7257 Ditzingen (DE)**
Erfinder: **Przybylla, Fritz, Lauterbachweg 28, D-7100 Heilbronn (DE)**
Erfinder: **Christen, Wolfgang, Schauchertstrasse 30, D-7251 Hemmingen (DE)**
Erfinder: **Grimminger, Albert, Berghalde 33, D-7250 Leonberg 7 (DE)**

(74) Vertreter: **Stehmann, Hans, Dipl.-Ing. et al, Essenweinstrasse 4-6, D-8500 Nürnberg (DE)**

(54) **Knetkörper für Extruderschneckenmaschinen.**

(57) Bei einem Knetkörper für Extruderschneckenmaschinen sind in den radial außenliegenden Bereichen höchster Beanspruchung verschleißfeste Materialien angebracht.

Um die verschleißfesten Materialien ohne Gefahr des Ausbrechens oder Abplatzens und ohne negative Beeinflussung des Verschleißwiderstandes des Knetkörpers selber in einfacher Weise an diesem anbringen zu können, ist in jedem Bereich höchster Beanspruchung (Knetkanten 17, 18) mindestens ein weitgehend vom Knetkörper (1) umgebenes und dauerhaft an diesem befestigtes Einsatzteil aus verschleißfestem Material vorgesehen.

EP 0 001 970 A1

Werner & Pfleiderer, Theodorstraße 1o,
D-7ooo Stuttgart 3o

————————————————————————————————————————

"Knetkörper für Extruderschneckenmaschinen"

————————————————————————————————————————

Die Erfindung betrifft einen Knetkörper für Extruderschneckenmaschinen, mit in den radial außen liegenden
Bereichen höchster Beanspruchung angebrachten verschleißfesten Materialien.

Derartige Knetkörper sind bekannt. Sie werden in einwelligen und mehrwelligen Extruder-Schneckenmaschinen in den Zonen eingesetzt, in denen eine besonders
hohe Knetleistung und damit Scherbeanspruchung im
Mischgut erfolgt. Derartige Knetkörper werden aus
dem Querschnitt des zugeordneten Schneckenprofils aufgebaut, so daß bei einem zweigängigen Schneckenprofil
ein etwa linsenförmiger Querschnitt des Knetkörpers
und bei einer dreigängigen Schnecke ein dreieckiger
Querschnitt des Knetkörpers entsteht, wobei die Begrenzungslinien des Knetkörpers jeweils aus Kreisbogenabschnitten bestehen.

Wegen des Einsatzes derartiger Knetkörper in den Zonen
höchster Scherbeanspruchung des zu behandelnden
Mischgutes sind diese Knetkörper in ihrem radial am

0001970

weitesten außen liegenden Bereich, wo die höchsten Scherbeanspruchungen des Mischgutes erzeugt werden, einem besonders hohen Verschleiß ausgesetzt. Diese Bereiche werden als Knetkanten bezeichnet, auch wenn sie eine gewisse flächenhafte Ausdehung haben. Derartige Knetkörper werden ohnehin insgesamt in ihrem Verschleißwiderstand dadurch erhöht, daß sie gehärtet werden, und zwar entweder einer Oberflächenhärtung durch nitrieren oder Einsatzhärten oder einem Durchhärten des gesamten Bauteiles unterworfen werden. Weiterhin ist es bekannt, die Knetkanten zusätzlich noch mit einem verschleißfesten Material zu versehen, das durch Auftragsschweißung aufgebracht wird. Diese Maßnahmen weisen folgende Nachteile auf. Bei Verwendung von durchhärtbaren Stählen, wie Werkzeugstählen oder Schnellarbeitsstählen, als Grundmaterial des Knetkörpers ist eine gute Schweißverbindung kaum herstellbar. Außerdem werden beim Schweißvorgang die Umgebungszonen derartig stark erhitzt, daß sie die durch die Härtung erzielte Verschleißfestigkeit verlieren. Darüber hinaus ist die Fertigbearbeitung von durchgehärteten Werkstücken besonders aufwendig. Bei Einsatz von durch Nitrieren oder Einsatzhärten oberflächengehärteten Knetkörpern geht bei Aufbringung einer Auftragsschweißung nach dem Härtevorgang ebenfalls die Verschleißfestigkeit in diesem Bereich verloren. Wird dagegen das verschleißfeste Material vor dem Härten des Knetkörpers aufgeschweißt, so verlaufen die beim anschließenden Oberflächenhärten auftretenden Diffusionsvorgänge ungleich. Soweit ein Abschrecken (Einsetzen) erfolgt, ist zusätzlich die Gefahr des Abplatzens des aufgeschweißten Verschleißmaterials sehr groß.

Aus der US-PS 3 375 549 ist es ebenfalls bereits bekannt, auf den Schneckenwindungen einer Extruder-Schneckenmaschine verschleißfestes Material durch Auftragsschweißung anzubringen. Hier gelten die gleichen Nachteile, wie sie zuvor geschildert wurden.

Aus der DE-AS 23 35 588 ist es bekannt, Verbundgußstücke mit einer Panzerung aus Hartstoffteilchen in den verschleißbeanspruchten Zonen in der Weise herzustellen, daß in diesen verschleißbeanspruchten Zonen einzelne Hartstoffteilchen bereits beim Gießen des Gußstückes eingebettet werden. Hierzu müssen die einzelnen Hartstoffteilchen in der Gießform bereits in geordneter Verteilung fixiert werden. Ein solches Verfahren ist außerordentlich aufwendig.

Aus der DE-AS 17 59 599 ist es bekannt, verschleißgefährdete Spitzen von Mischerschaufeln für Mischmaschinen, beispielsweise für Ringtrogmischer, mit einer Platte aus einem Hartmetall in der Weise zu versehen, wie es bei hochbeanspruchten Schneidmetallwerkzeugen, wie Drehwerkzeugen, Fräswerkzeugen od. dgl., bekannt ist.

Aus der DE-PS 24 26 732 ist es schließlich bekannt, verschleißgeschützte Schneckengehäuse von Schneckenmaschinen mit in entsprechende Ausnehmungen im Schneckengehäuse eingesetzten Verschleißeinsätzen zu versehen.

Der Erfindung liegt die Aufgabe zugrunde, Knetkörper der eingangs beschriebenen Art so auszugestalten, daß die verschleißfesten Materialien ohne Gefahr des Ausbrechens oder Abplatzens und ohne negative Beeinflussung des Verschleißwiderstandes des Knetkörpers selber in einfacher Weise an diesem angebracht werden
können.

Diese Aufgabe wird erfindungsgemäß dadurch gelöst, daß
in jedem Bereich höchster Beanspruchung mindestens
ein weitgehend vom Knetkörper umgebenes und dauerhaft
in diesem befestigtes Einsatzteil aus verschleißfestem
Material vorgesehen ist. Es werden also vorgefertigte
Einsatzteile in entsprechende Ausnehmungen im Knetkörper eingesetzt. Vorteilhafterweise geschieht dies
so, daß das mindestens eine Einsatzteil in der beanspruchten Außenfläche des Knetkörpers frei liegt. Auch
wenn hierbei nicht der gesamte hochbeanspruchte Bereich
der sogenannten Knetkante aus diesem hochverschleißfesten Material besteht, so wird er doch auch in der
Umgebung des oder der Einsatzteile soweit gestützt,
daß insgesamt eine erhebliche Verringerung des Verschleißes eintritt. Weiterhin ist es in vorteilhafter
Weise möglich, daß das mindestens eine Einsatzteil in
geringem Abstand von der beanspruchten Außenfläche im
Knetkörper angeordnet ist. Bei dem unvermeidbaren Verschleiß wird dieses Einsatzteil dann nach einer gewissen Zeit frei gelegt und setzt dann eine Grenze für
den Verschleiß. Hinzu kommt, daß diese Ausgestaltung
besonders dann sehr vorteilhaft ist, wenn der Knetkörper selbst mittels Oberflächenhärtung behandelt wird.
In diesem Falle erfolgt die Härtung vor dem Einsetzen
des Einsatzteiles, so daß auch eine Oberflächenhärtung
von der Innenseite der das Einsatzteil aufnehmenden
Ausnehmung her erfolgt. Gemäß einer besonders vorteilhaften Ausgestaltung der Erfindung ist das mindestens eine Einsatzteil als durch geradlinige und zueinander parallele Mantellinien begrenzter Körper ausgebildet und ist in einer entsprechend angepaßten Ausnehmung angeordnet. Als besonders einfach hat es sich hierbei erwiesen, wenn das mindestens eine Einsatzteil als zylindrischer Körper ausgebildet und in einer entsprechenden zylindrischen Bohrung im Knetkörper angebracht ist. Alternativ kann es genauso vorteilhaft sein, wenn das mindestens eine Einsatzteil als quaderförmiger Körper ausgebildet und in einer entsprechenden nutförmigen Ausnehmung im Knetkörper angebracht ist.

Für die Befestigung des mindestens einen Einsatzteils im Knetkörper bietet sich ein Löten oder Befestigen mittels eines wärmebeständigen Zements an. Diese Art der Befestigung weist den zusätzlichen Vorteil auf, daß das Einsatzteil nicht exakt in seinem Querschnitt dem Querschnitt der entsprechenden Ausnehmung angepaßt sein muß, da Toleranzen durch das Befestigungsmittel, nämlich das Lot oder den Zement, ausgeglichen werden.

Weitere Vorteile und Merkmale der Erfindung ergeben sich aus der Beschreibung von Ausführungsbeispielen anhand der Zeichnung. In der Zeichnung zeigt

Fig. 1 einen Knetkörper gemäß der Erfindung in einer perspektivischen Stirnansicht,

Fig. 2 eine Teildraufsicht auf den Knetkörper nach Fig. 1,

Fig. 3 einen Knetkörper mit einer geänderten Anordnung von Einsatzteilen in einer Teil-
stirnansicht,

Fig. 4 eine Teil-Draufsicht auf den Knetkörper
nach Fig. 3,

Fig. 5 eine Teil-Stirnansicht eines Knetkörpers
mit einer anderen Ausgestaltung eines
Einsatzteiles,

Fig. 6 eine Teil-Draufsicht auf den Knetkörper
nach Fig. 5,

Fig. 7 eine Teil-Stirnansicht eines Knetkörpers
mit einer anderen Ausgestaltung eines Einsatzteiles,

Fig. 8 eine Teil-Draufsicht auf den Knetkörper nach
Fig. 7,

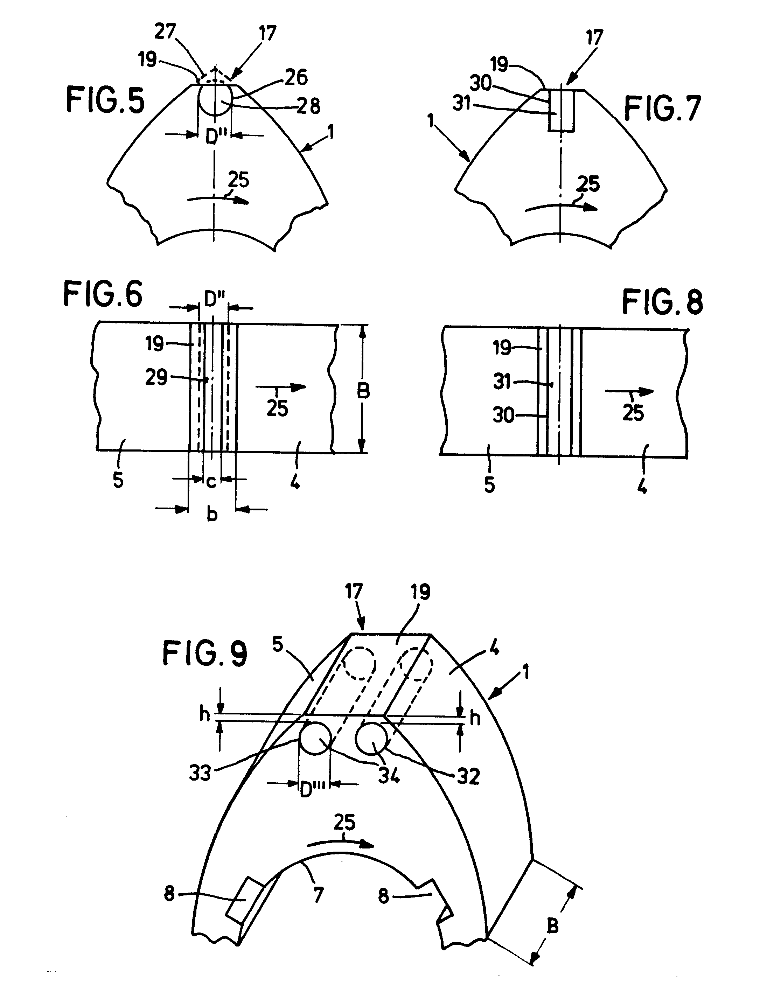

Fig. 9 eine perspektivische Teil-Stirnansicht
eines Knetkörpers mit einer weiteren Ausgestaltung eines Einsatzteiles,

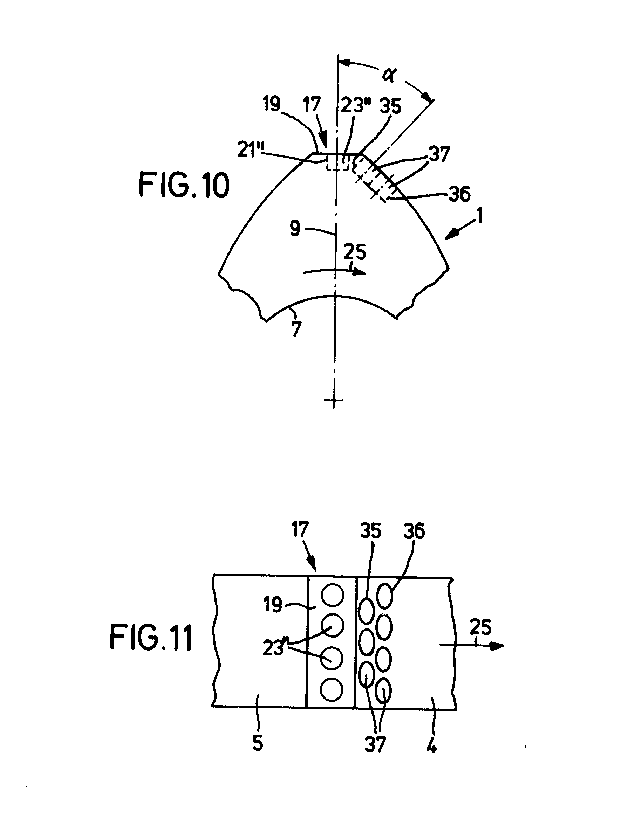

Fig.10 eine Teil-Stirnansicht eines Knetkörpers mit
einer zusätzlichen Verschleißauskleidung der
Außenumfangsfläche und

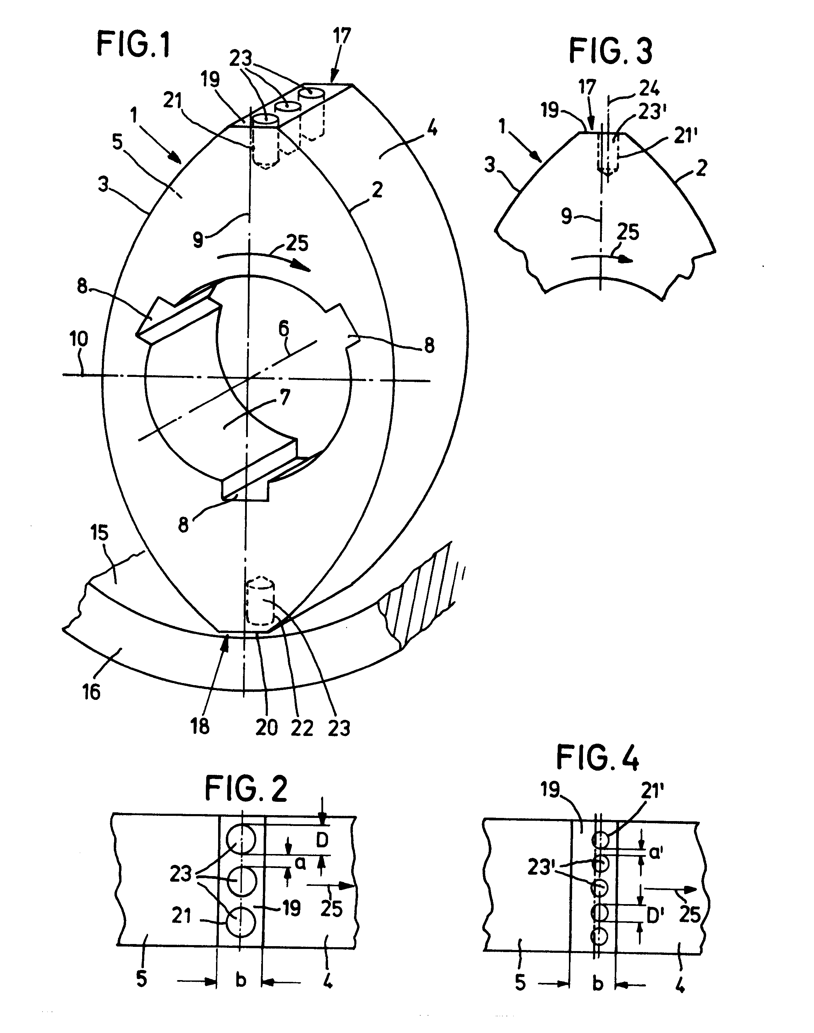

Fig.11 eine Teil-Draufsicht auf Fig. 1o.

Wie aus Fig. 1 ersichtlich ist, hat der dort dargestellte Knetkörper 1 einen Querschnitt,der durch zwei Kreisbogensegmente 2, 3 begrenzt wird. Die Mantellinien seiner Außenumfangsflächen 4, 5 verlaufen alle parallel zur Mittellängsachse 6. Im Knetkörper 1 ist konzentrisch zur Mittellängsachse 6 eine Wellenbohrung 7 mit mehreren Keilnuten 8 angebracht, so daß der Knetkörper 1 auf einer Schneckenwelle eines Schneckenextruders mittels in die Keilnuten 8 eingreifender Keile drehfest festgelegt werden kann.

Derartige bekannte Knetkörper 1 werden zwischen Schnekkenabschnitten auf der erwähnten Schneckenwelle angebracht, wobei die Länge ihrer großen - in Fig. 1 senkrecht angeordneten - Achse 9 gleich dem Gesamtdurchmesser des benachbart anzuordnenden Schneckenabschnittes ist. Die Länge der kleinen - in Fig. 1 waagerechten - Achse 1o entspricht dagegen dem Durchmesser des Schneckenkerns des benachbart anzuordnenden Schneckenabschnittes, dessen Querschnitt im übrigen deckungsgleich ist mit der Stirnseite des Knetkörpers 1.

Der Knetkörper 1 weist im Bereich der Schnittlinien der beiden Außenumfangsflächen 4, 5 den kleinsten Abstand zur zylindrischen Innenwand 15 des Extrudergehäuses 16 auf, dessen Mittellängsachse mit der Mittellängsachse 6 des Knetkörpers 1 zusammenfällt.

In diesen als Knetkanten 17, 18 bezeichneten Bereichen geringsten Abstandes zur Innenwand 15 des Extrudergehäuses 16 ist die Knetbehandlung des zu behandelnden Gutes am größten, weil hier die größten Kräfte auf das zu behandelnde Material ausgeübt werden. Aus diesem Grunde ist in diesen Bereichen der Verschleiß des Knetkörpers 1 auch am größten.

In diesem Bereich ist der Knetkörper 1 jeweils mit Abflachungen 19, 2o versehen, die parallel zur Mittellängsachse 6 und zur kleinen Achse 1o, also auch parallel zur Innenwand 15 des Extrudergehäuses 16 verlaufen.

Bei dem Ausführungsbeispiel nach den Fig. 1 und 2 sind in dem Knetkörper 1 Bohrungen 21, 22 angebracht, die zur jeweiligen Abflachung 19 bzw. 2o der Knetkante 17 bzw. 18 hin offen sind und sich von dieser in Richtung der großen Achse 9 in den Knetkörper 1 hinein erstrecken. Wie aus den Fig. 1 und 2 ersichtlich ist, ist der Durchmesser D dieser Bohrungen 21 bzw. 22 etwas kleiner als die Breite b der Abflachungen 19, 2o. Außerdem sind benachbarte Bohrungen in einem Abstand a voneinander angebracht, der deutlich kleiner ist, als der Durchmesser D, auf jeden Fall aber größer Null.

In diese Bohrungen 21, 22 sind Einsatzteile in Form von zylindrischen Körpern 23 eingesetzt.

Das Ausführungsbeispiel nach den Fig. 3 und 4 unterscheidet sich von dem Ausführungsbeispiel nach den Fig. 1 und 2 nur in folgendem: Es ist eine größere Zahl von Bohrungen 21' in den Abflachungen 19 angebracht. Außerdem sind die Achsen 24 dieser Bohrungen 21' gegenüber der großen Achse 9 in Drehrichtung 25 des Knetkörpers 1 etwas vor dieser angeordnet. Da die Zahl der zylindrischen Körper 23' größer ist als bei dem Ausführungsbeispiel nach den Fig. 1 und 2 sind die Maße D' und a' jeweils kleiner als die entsprechenden Maße bei dem Ausführungsbeispiel nach den Fig. 1 und 2.

Da der Knetkörper 1 jeweils zu den Achsen 9, 1o symmetrisch aufgebaut ist, ist bei dem Ausführungsbeispiel nach den Fig. 3 und 4 und auch bei den nachfolgend noch zu beschreibenden Ausführungsbeispielen jeweils nur ein Teilausschnitt eines Knetkörpers 1 mit einer Abflachung 19 im Bereich der Knetkante 17 dargestellt.

Bei der Ausführungsform nach den Fig. 5 und 6 wird im Bereich der jeweiligen Knetkante 17 vor dem Erzeugen der Abflachung 19, also dann, wenn der gestrichelt dargestellte, durch die Außenumfangsflächen 4, 5 und die spätere Abflachung 19 begrenzte Zwickel noch vorhanden ist, parallel zur Mittellängsachse 6 eine Bohrung 26 angebracht, deren größerer Teil in dem Bereich zwischen der noch anzubringenden Abflachung 19 und der Mittellängsachse 6 liegt und deren kleinerer Teil in dem erwähnten durch die gestrichelten Abschnitte der Außenumfangsflächen 4, 5 und die Abflachung 19 gebildeten Zwickel 27 liegt. In diese Bohrung 26 wird dann als Einsatzteil ein zylindrischer Körper 28 eingesetzt, der sich über die volle Breite B des Knetkörpers 1 erstreckt. Beim Abschleifen des Zwickels 27 bis zur Abflachung 19 wird gleichzeitig der in den Zwickel 27 hineinragende Teil des zylindrischen Körpers 28 mit abgeschliffen, so daß dieser dann nur noch zylindersegmentförmig ist und in der Abflachung 19 selbst eine frei liegende Fläche 29 aufweist, deren Breite c kleiner ist als der Durchmesser D" des zylindrischen Körpers 28. Außerdem ist die Breite c der frei liegenden Fläche 29 kleiner als die Breite b der Abflachung 19.

Bei der Ausführung nach den Fig. 7 und 8 ist in den Knetkörper 1 eine zur Abflachung 19 hin offene nutförmige Ausnehmung 3o eingearbeitet, in die ein Einsatzteil in Form eines im Querschnitt angepaßten, in diesem Fall also quaderförmigen Körpers 31 eingesetzt ist.

Bei der Ausführungsform nach Fig. 9 sind in den Knetkörper 1 parallel zur Mittellängsachse 6 und mit geringem Abstand h zur Abflachung 19 zwei sich über die volle Breite B des Knetkörpers 1 erstreckende Bohrungen 32, 33 angebracht, in die im Querschnitt entsprechend angepaßte Einsatzteile in Form von zylindrischen Körpern 34 eingesetzt sind. Der Abstand h der Bohrungen 32, 33 von der Abflachung 19 ist klein im Verhältnis zum Durchmesser $D''$ der Bohrungen 32, 33.

Die Ausführungsform nach den Fig. 1o und 11 ist der nach den Fig. 1 und 2 bzw. den Fig. 3 und 4 sehr ähnlich, d. h. im Bereich der Knetkante 17 sind in die Abflachung 19 zylindrische Bohrungen 21" angebracht, die ebenfalls symmetrisch zur großen Achse 9 verlaufen. In diese Bohrungen 21" sind entsprechende zylindrische Körper 23" als Einsatzteile eingesetzt. Zusätzlich sind in den der Knetkante 17 in Drehrichtung 25 unmittelbar vorgeordneten Bereich der Außenumfangsfläche 4 ebenfalls noch zylindrische Bohrungen 35, 36 eingebracht, die jeweils senkrecht zur Tangentialrichtung der Außenumfangsfläche 4 im Bereich der jeweiligen Bohrung 35 bzw. 36 liegen. Die Bohrungen 35, 36 sind jeweils in Reihen angeordnet, wobei jeweils jede Bohrung 35 der der Abflachung 19 nächstliegenden Reihe gegenüber den entsprechenden Bohrungen 21" im Bereich der Knetkante 17 versetzt angeordnet ist. Hierdurch wird erreicht, daß die Bohrungen 21" und 35 verhältnismäßig dicht nebeneinander angeordnet werden können, obwohl sie nicht parallel zueinander verlaufen, sondern - wie aus Fig. 1o anschaulich hervorgeht - unter einem Winkel $\alpha$ , der kleiner als 90$^{o}$ ist, zueinander angeordnet sind. Auch die nächste Reihe von Bohrungen 36 ist wiederum gegenüber den Bohrungen 35 der vorhergehenden Reihe versetzt angeordnet, um diese beiden Reihen von Bohrungen verhältnismäßig dicht nebeneinander anordnen zu können. In die Bohrungen 35 und 36 sind ebenfalls zylindrische Körper 37 als Einsatzteile eingefügt. Hierdurch wird auch der der Knetkante 17 in Drehrichtung 25 unmittelbar vorgeordnete Bereich der Außenumfangsfläche 4 des Knetkörpers 1 in gleicher Weise verschleißfest ausgerüstet, wie die Knetkante selber.

Die Einsatzteile, also die zylindrischen Körper 23, 23', 23", 28,34 bzw. der quaderförmige Körper 31, bestehen aus extrem verschleißfesten Stoffen, wie Hartmetall, Hartguß oder Werkzeugstählen, oder aber auch aus keramischen Werkstoffen, wie Schneidkeramik. In diesem Zusammenhang sei besonders auf Wolfram-Karbid oder Bor-Karbid hingewiesen.

Die Einsatzteile werden in die Bohrungen 21, 22, 21', 21", 26, 32, 33 bzw. die Ausnehmung 3o eingelötet oder mittels eines wärmebeständigen Zements eingekittet. Aus diesem Grunde braucht auch die Form der Einsatzteile nicht exakt der der Bohrungen bzw. Ausnehmungen zu entsprechen. Das Einsetzen der Einsatzteile kann vor dem Härten der Knetkörper 1 mittels Einsatzhärtung oder Nitrieren oder nach diesem Härten vorgenommen werden. Insbesondere bei dem Ausführungsbeispiel nach Fig. 9 empfiehlt es sich allerdings, das Härten des Knetkörpers vor dem Einsetzen der Einsatzteile (zylindrischer Körper 34) vorzunehmen, da in diesem Fall der Knetkörper im Bereich seiner Knetkante sozusagen zweiseitig, nämlich einmal von außen und zum anderen von der Innenseite der Bohrungen 32, 33 gehärtet wird. Im Anschluß an das Einsetzen der Einsatzstücke erfolgt dann noch ein Überschleifen der gehärteten Knetkörper auf ihr exaktes Maß.

Knetkörper, wie sie in den vorstehenden Ausführungsbeispielen zugrundegelegt wurden, sind beispielsweise aus der DE-PS 813 154 bekannt. Knetkörper mit drei Knetkanten, wie sie eingangs bereits erwähnt wurden, und wo die erfindungsgemäßen Verschleißschutzmaßnahmen gleichermaßen angewendet werden können, sind beispielsweise aus der DE-PS 94o 1o9 (entsprechend US-PS 2 814 472 und GB-PS 755 o69) und aus der US-PS 3 122 356 bekannt, wobei aus letzterer auch die Anordnung derartiger Knetkörper zwischen zwei benachbarten Schneckenabschnitten erkennbar ist.

Wie aus den vorzitierten Vorveröffentlichungen bekannt ist, werden derartige Knetkörper überwiegend auf den Wellen mindestens zweiwelliger Schneckenkneter eingesetzt, wobei die jeweiligen Knetkörper auf den verschiedenen Wellen so angeordnet werden, daß sie sich gegenseitig abstreifen. Um diesen Abstreifeffekt und natürlich auch den Kneteffekt zu erhalten, darf der Verschleiß der Knetkanten insgesamt nur sehr klein sein, d. h. er darf - abhängig von der Art des Schneckenkneters und dem Schneckendurchmesser - höchstens wenige Millimeter betragen. Daraus ergibt sich, daß die notwendige Länge der Einsatzteile primär dadurch bestimmt wird, daß sie genügend fest im Knetkörper verankert werden und nicht zum Ausbrechen neigen.

Die Maßnahmen nach den Fig. 1 bis 4 und 1o, 11 können selbstverständlich auch an den Außenflächen bzw. Flanken der Schneckenwindungen von Schneckenknetern vorgesehen werden.

Patentansprüche:

1. Knetkörper für Extruderschneckenmaschinen, mit in den radial außen liegenden Breichen höchster Beanspruchung angebrachten verschleißfesten Materialien, dadurch gekennzeichnet, daß in jedem Bereich höchster Beanspruchung (Knetkanten 17, 18) mindestens ein weitgehend vom Knetkörper (1) umgebenes und dauerhaft in diesem befestigtes Einsatzteil aus verschleißfestem Material vorgesehen ist.

2. Knetkörper nach Anspruch 1, dadurch gekennzeichnet, daß das mindestens eine Einsatzteil in dessen beanspruchter Außenfläche frei liegt.

3. Knetkörper nach Anspruch 1, dadurch gekennzeichnet, daß das mindestens eine Einsatzteil in geringem Abstand (h) von der beanspruchten Außenfläche angeordnet ist.

4. Knetkörper nach einem der Ansprüche 1 bis 3, dadurch gekennzeichnet, daß das mindestens eine Einsatzteil als durch geradlinige und zueinander parallele Mantellinien begrenzter Körper (23, 23', 23", 28, 31, 34) ausgebildet ist und in einer entsprechend angepaßten Ausnehmung angeordnet ist.

5. Knetkörper nach Anspruch 4, dadurch gekennzeichnet, daß das mindestens eine Einsatzteil als zylindrischer Körper (23, 23', 23", 28, 34) ausgebildet ist und in einer entsprechenden zylindrischen Bohrung (21, 22, 21', 21", 26, 32, 33) im Knetkörper (1) angebracht ist.

... 2

6. Knetkörper nach Anspruch 4, dadurch gekennzeichnet, daß das mindestens eine Einsatzteil als quaderförmiger Körper (31) ausgebildet und in einer entsprechenden nutförmigen Ausnehmung (3o) im Knetkörper (1) angebracht ist.

7. Knetkörper nach einem der Ansprüche 1 bis 6, dadurch gekennzeichnet, daß das mindestens eine Einsatzteil in die entsprechende Ausnehmung eingelötet ist.

8. Knetkörper nach einem der Ansprüche 1 bis 6, dadurch gekennzeichnet, daß das mindestens eine Einsatzteil in der entsprechenden Ausnehmung mittels wärmebeständigen Zements befestigt ist.

1/3

FIG.1

FIG.3

FIG.2

FIG.4

0001970

FIG.5

FIG.7

FIG.6

FIG.8

FIG.9

FIG.10

FIG.11

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| – | <u>DE – C – 295 431</u> (F. KEMPTER) <br> * Seite 1, Zeilen 29 bis 41; Fig. 1 und 2 * <br> –– | 1 | B 29 B 1/06 <br> B 29 B 1/10 <br> B 29 F 3/02 |
| – | <u>US – A – 3 804 382</u> (W.W. PULTZ) <br> * Spalte 2, Zeile 67 bis Spalte 3, Zeile 14; Spalte 4, Zeilen 2 bis 20; Fig. 2 und 3 * <br> –– | 1,2 | |
| D | <u>DE – B – 1 759 599</u> (VERSCHLEIß- TECHNIK) <br> * Spalte 2, Zeilen 36 bis 47; Fig. 1 bis 3 * <br> –– | | RECHERCHIERTE SACHGEBIETE (Int. Cl.²) <br> B 29 B 1/06 <br> B 29 B 1/10 <br> B 29 F 3/02 <br> B 29 H 1/10 <br> B 28 C 5/14 |
| D | <u>DE – B – 2 426 732</u> (WERNER UND PFLEIDERER) <br> * Spalte 2, Zeile 58 bis Spalte 3, Zeile 17; Spalte 4, Zeilen 14 bis 47; Fig. 1 und 2 * <br> –– | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 23-02-1979 | BRUCK |

EPA form 1503.1 06.78